Europäisches Patentamt

European Patent Office

Office européen des brevets

(19)

(11) Numéro de publication : **0 153 262 B1**

# (12) FASCICULE DE BREVET EUROPÉEN

(45) Date de publication du fascicule du brevet :
07.09.88

(21) Numéro de dépôt : **85440009.0**

(22) Date de dépôt : **15.02.85**

(51) Int. Cl.⁴ : **B 27 B 5/18**, B 23 D 47/02// B23Q11/08

(54) **Dispositif de guidage pour chariot de machine à scier.**

(30) Priorité : **20.02.84 FR 8402718**

(43) Date de publication de la demande :
**28.08.85 Bulletin 85/35**

(45) Mention de la délivrance du brevet :
**07.09.88 Bulletin 88/36**

(84) Etats contractants désignés :
**AT BE CH DE GB IT LI LU NL SE**

(56) Documents cités :
**FR-A-    372 401**
**GB-A-    284 642**
**GB-A-    651 999**
**GB-A-    903 240**
**GB-A- 1 058 958**
**US-A- 1 813 783**
**US-A- 2 260 421**
**US-A- 2 601 878**
**US-A- 4 334 450**

(73) Titulaire : **SMID S.A., Société Anonyme dite:**
**54, rue Poincaré**
**F-68460 Lutterbach (FR)**

(72) Inventeur : **Erhard, Raymond**
**6, rue de la Carrière**
**F-68760 Willer-Sur-Thur (FR)**

(74) Mandataire : **Aubertin, François**
**Cabinet Lepage & Aubertin Innovations et Presta-**
**tions 4, rue de Haguenau**
**F-67000 Strasbourg (FR)**

## Description

L'invention concerne un dispositif de guidage pour le chariot d'une machine à scier par le dessous de plaques, cette machine à scier ayant un châssis à poutres porteuses délimitant un canal de sciage sur lesquelles sont fixés des rails de guidage.

Les machines à scier des plaques présentent souvent des longueurs importantes. Le ou les chariots supportant la ou les scies se déplacent sur des rails de guidage positionnés dans le châssis. Or, les précisions de coupe sont fréquemment tributaires de la minutie conférée au positionnement des rails de guidage. Par ailleurs, il est nécessaire que ces rails doivent présenter certaines caractéristiques telles que comporter une protection vis-à-vis des chocs, une protection envers les copeaux et les poussières et une accessibilité maximale pour faciliter leur réglage. Pour une bonne stabilité du chariot au cours de son déplacement, il est souhaitable que l'écartement entre les rails de guidage soit le plus grand possible en fonction de la largeur de la machine à scier alors que leur positionnement en hauteur doit être réduit par rapport à la lame de scie.

On connaît déjà différents dispositifs de guidage. Un de ces dispositifs connus se compose d'éléments modulaires ayant la forme de châssis dont le nombre est fonction de la longueur de la machine à scier. Les éléments modulaires, se rajoutant les uns aux autres, comportent un châssis du type fermé qui repose sur le sol par l'intermédiaire de pieds rapprochés. Ces éléments modulaires présentent à leur partie supérieure une fente permettant le passage de la lame de scie. Les rails de guidage pour le chariot sont fixés sur les parois internes des éléments modulaires. Il existe plusieurs possibilités pour positionner ces rails de guidage, soit les deux rails de guidage sont solidaires de la paroi interne supérieure ou de la paroi interne inférieure ou des parois internes latérales, soit l'un des rails de guidage est solidaire de la paroi interne supérieure et l'autre rail de guidage est fixé sur la paroi interne inférieure ou sur l'une des parois internes latérales.

On connaît également un dispositif de guidage appliqué à une machine à scier comportant un châssis présentant des poutres porteuses. La longueur de ce châssis est identique à celle de la machine à scier. Ce châssis se compose de deux poutres porteuses de section carrée ou rectangulaire, disposées parallèlement de part et d'autre de la ligne de sciage et d'une table transversale reliant les deux poutres porteuses et présentant une fente longitudinale pour le passage de la lame de scie. L'une ou l'autre des parois verticales des poutres porteuses est prolongée vers le bas par un support. Les rails de guidage sont fixés soit sur la face inférieure de la table transversale, soit sur la face interne du support, ou on combine les différentes positions.

On connaît également, par le document GB-A-903 240, un dispositif de guidage pour le chariot d'une machine à scier par le dessous de plaques, cette machine à scier ayant un châssis à poutres porteuses délimitant un canal de sciage sur lesquelles sont fixés des rails de guidage.

Cependant, pour ces dispositifs connus, les rails de guidage sont placés à proximité du canal de sciage. De ce fait, les rails de guidage ne sont pas protégés envers les copeaux et les poussières. De plus, lorsque la machine à scier comporte un châssis à poutres porteuses, les rails de guidage sont disposés entre les poutres porteuses et, de ce fait, deviennent difficilement accessibles.

La présente invention a pour but de remédier à ces inconvénients. L'invention, telle qu'elle est caractérisée dans la revendication 1, résout le problème en proposant un dispositif de guidage pour le chariot d'une machine à scier par le dessous des plaques, cette machine à scier ayant un châssis à poutres porteuses délimitant un canal de sciage et sur lesquelles sont fixés des rails de guidage caractérisé en ce que les deux rails de guidage sont placés à l'extérieur du canal de sciage et solidaires d'une cloison de séparation, disposée entre le rail de guidage et le canal de sciage et située dans le prolongement de la paroi verticale de la poutre porteuse la plus proche du plan médian du canal de sciage, l'axe longitudinal des deux rails de guidage étant situé dans un plan vertical perpendiculaire à la paroi horizontale reliant entre elles les parois verticales de chaque poutre porteuse.

Les avantages obtenus grâce à cette invention consistent essentiellement en ce que le chariot porteur de la lame de scie présente un déplacement stable en conférant aux rails de guidage un écartement maximum par rapport à la largeur de la machine à scier. De plus, les rails de guidage sont protégés vis-à-vis des copeaux et les poussières et il est possible d'accéder latéralement au chariot et aux rails de guidage sans procéder au démontage du châssis.

L'invention est exposée ci-après plus en détail à l'aide de dessins représentant seulement un mode d'exécution.

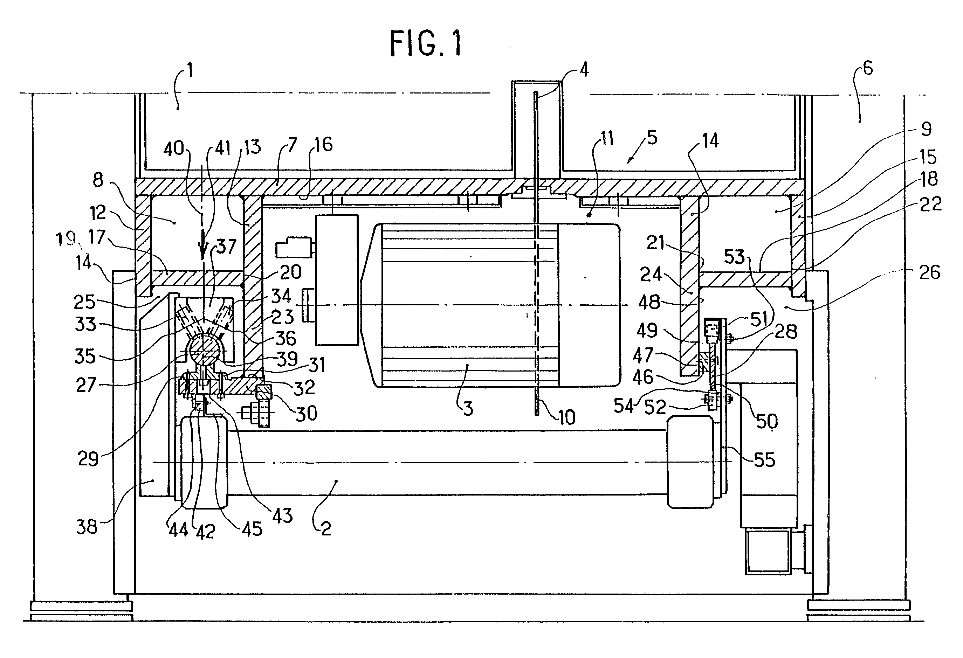

La figure 1 représente en vue en élévation et en coupe, un dispositif de guidage conforme à l'invention et appliqué à une machine à scier dont le châssis est composé de poutres porteuses.

On se réfère à la figure unique.

La machine 1 à scier par en-dessous les planches de grande longueur comporte un chariot 2 servant de support à un moteur 3 entraînant une lame de scie 4. Cette dernière fait saillie par rapport au dessus 5 d'un châssis 6. Ce châssis 6 se compose d'une table 7 sur laquelle sont placées les planches à scier et de deux poutres porteuses 8, 9. Ces poutres porteuses 8, 9 sont parallèles entre elles et sont disposées de part et d'autre du plan médian longitudinal 10 de la machine 1. Les poutres porteuses 8, 9 délimitent un canal de sciage 11. Chaque poutre porteuse 8, 9 a une section carrée ou rectangulaire et se compose de deux parois verticales 12, 13, 14, 15 solidaires de la face inférieure 16 de la table 7 et d'une paroi horizontale 17, 18 reliant entre elles les extrémités inférieures 19, 20, 21, 22 des deux parois verticales 12, 13, 14, 15. La paroi verticale 13, 14 la plus proche du plan médian longitudinal 10 de la machine 1 comporte dans son prolongement vertical une cloison de séparation 23, 24. De ce fait, on obtient deux couloirs 25, 26, protégés vis-à-vis des copeaux dans lesquels on dispose de deux rails de guidage 27, 28.

Selon un premier mode de réalisation visible dans la partie gauche du dessin, les rails de guidage 27, 28 comportent une section ronde et sont maintenus par des éclisses 29, rendues solidaires d'un support 30 par des éléments de fixation 31. Pour l'alignement correct du rail de guidage 27, 28, les éclisses 29 peuvent être déplacées latéralement. Le support 30 est solidaire du chant inférieur 32 de la cloison de séparation 23, 24. Sur ces rails de guidage 27, 28 se déplacent des éléments de roulement composés de deux galets 33, 34 formant entre eux un certain angle pour faciliter l'auto-centrage des éléments de roulement par rapport aux rails de guidage 27, 28. Ces galets 33, 34 pivotent autour d'un axe 35, 36 maintenu par un boîtier 37. Ce boîtier 37 est rendu solidaire du chariot 2 par un support 38. Selon l'invention, l'axe longitudinal 39 du rail de guidage 27, 28 est situé dans le même plan vertical 40 que le centre de gravité 41 de chaque poutre porteuse 8, 9, ce plan vertical (40) étant perpendiculaire à la paroi horizontale (17, 18) reliant entre elles les parois verticales (12, 13) et (14, 15) de chaque poutre porteuse (8, 9). Pour annihiler toute remontée du chariot 2, on peut prévoir un galet de pression 42 prenant appui sur la face inférieure 43 du support 30. Ce galet 42 pivote autour d'un axe 44 maintenu par un support 45 solidaire du chariot 2.

Selon un autre mode de réalisation, visible dans la partie droite du dessin, les rails de guidage 27, 28 comportent une section rectangulaire et sont fixés à l'aide d'une entretoise 46 à l'extrémité inférieure 47 de la face externe 48 de la cloison de séparation 23, 24. Sur le chant supérieur 49 et le chant inférieur 50 des rails de guidage 27, 28 se déplacent des galets 51, 52 pivotant autour d'un axe 53, 54 maintenu par un support 55 solidaire du chariot 2.

Selon une variante, le guidage du chariot 2 est assuré par la combinaison des deux modes de réalisation décrits ci-dessus.

## Revendications

1. Dispositif de guidage pour chariot (2) de machine à scier par le dessous (1) des plaques, cette machine à scier (1) ayant un châssis (6) à poutres porteuses (8, 9) délimitant un canal de sciage (11) et sur lesquelles sont fixés des rails de guidage (27, 28), caractérisé en ce que les deux rails de guidage (27, 28) sont placés à l'extérieur du canal de sciage (11) et sont solidaires d'une cloison de séparation (23, 24) disposée entre le rail de guidage (27, 28) et le canal de sciage (11) et située dans le prolongement de la paroi verticale (13, 14) de la poutre porteuse (8, 9) la plus proche du plan médian (10) du canal de sciage (11), l'axe longitudinal (39) des deux rails de guidage (27, 28) étant situé dans un plan vertical (40) perpendiculaire à la paroi horizontale (17, 18) reliant entre elles les parois verticales (12, 13) et (14, 15) de chaque poutre porteuse (8, 9).

2. Dispositif de guidage selon la revendication 1, caractérisé en ce que les rails de guidage (27, 28) comportent une section ronde et sont maintenus par des éclisses (29) déplaçables latéralement et fixées sur un support (30) solidaire du chant inférieur (32) de la cloison de séparation (23, 24).

3. Dispositif de guidage selon les revendications 1 et 2, caractérisé en ce que le chariot mobile (2) comporte les éléments de roulement se déplaçant sur les rails de guidage (27, 28) et composés de galets (33, 34) formant un angle entre eux pour l'auto-centrage.

4. Dispositif de guidage selon la revendication 3, caractérisé en ce que le chariot mobile (2) comporte un support (38) pourvu d'un boîtier (37) maintenant des axes (35, 36) autour desquels pivotent les galets (33, 34).

5. Dispositif de guidage selon la revendication 1, caractérisé en ce que les rails de guidage (27, 28) comportent une section rectangulaire et sont maintenus par des entretoises (46) solidaires de l'extrémité inférieure (47) de la face externe (48) de la cloison de séparation (23, 24).

6. Dispositif de guidage selon les revendications 1 et 5, caractérisé en ce que le chariot mobile (2) comporte un support (55) pourvu d'un axe (53, 54) autour duquel pivote un galet (51, 52) roulant sur le chant supérieur (49) et sur le chant inférieur (50) des rails de guidage (27, 28).

## Claims

1. Guide apparatus for the saw carrier (2) of a machine for sawing sheets from below, this sawing machine (1) having a support frame (6) with bearer beams (8, 9) defining a sawing path (11), and on which guide rails (27, 28) are fixed, characterised in that the two guide rails (27, 28) are located outside the sawing path (11) and are fixed to a screen wall (23, 24) which is disposed between the guide rail (27, 28) and the sawing path (11), each said screen wall being disposed in an extension of the vertical wall (13, 14) of the corresponding bearer beam (8, 9) nearest to the median plane (10) of the sawing path (11), the longitudinal axis (39) of the two guide rails (27, 28) being situated in a vertical plane (40) which is perpendicular to the horizontal wall (17, 18), the said horizontal walls connecting to each other the vertical walls (12, 13) and (14, 15) of each bearer beam (8, 9).

2. A guide apparatus according to Claim 1, characterised in that the guide rails (27, 28) have a round cross-section and are held by means of seating blocks (29) which are adjustable laterally and which are fixed on a support (30) fixed to the lower edge (32) of the screen wall (23,24).

3. A guide apparatus according to Claims 1 and 2 characterised in that the movable carrier (2) includes rolling members movable on the guide rails (27, 28) and comprising rollers (33, 34) defining an included angle for the purpose of automatic centering.

4. A guide apparatus according to Claim 3, characterised in that the travelling carrier (2) includes a support (38) carrying a housing (37) which holds the pivot pin (35, 36) around which the rollers (33, 34) are pivoted.

5. A guide apparatus according to Claim 1, characterised in that the guide rails (27, 28) are rectangular in cross-section, and are held by spacers (46) which are fixed to the lower end (47) of the outer face (48) of the screen wall (23, 24).

6. A guide apparatus according to Claims 1 and 5, characterised in that the movable carrier (2) includes a support (55) carrying a pivot pin (53, 54) around which there is pivoted a roller (51, 52) which rolls on the upper edge (49) and on the lower edge (50) of the guide rails (27, 28).

**Patentansprüche**

1. Führungsvorrichtung für einen Träger (2) in einer unterseitigen Sägemaschine (1) bestehend aus einem Rahmen (6) mit Balken (8, 9), von denen der Zuschnitt — oder Sägekanal (11) begrenzt ist und auf denen die Führungsschienen (27, 28) befestigt sind, dadurch gekennzeichnet, daß die beiden Führungsschienen (27, 28) auf der Aussenseite des Zuschnitt — oder Sägekanals (11) liegen und mit einer Trennwand (23, 24) verbunden sind, wobei der Zuschnitt- oder Sägekanal (11) in Verlängerung der senkrechten Wand (13, 14) des Balkens (8, 9), der sich am nähesten zur Medianebene (10) des Zuschnitt- oder Sägekanals (11) befindet, und die Längsachse (39) beider Führungsschienen (27, 28) in der Lotebene (40) senkrecht zur Horizontalwand (17, 18) liegt, von der die senkrechten Wände (12, 13 und 14, I5) jedes Balkens (8, 9) miteinander verbunden werden.

2. Führungsvorrichtung nach Anspruch 1, dadurch gekennzeichnet, daß die Führungsschienen (27, 28) einen Rundquerschnitt aufweisen, von seitlich verschiebbaren Laschen (29) gehalten und an der Halterung (30) verankert sind, die mit der Unterkante (32) der Trennwand (23, 24) verbunden ist.

3. Führungsvorrichtung nach einem der Ansprüche 1 und 2 dadurch gekennzeichnet, daß der bewegliche Träger (2) sich auf den Führungsschienen (27, 28) verschiebende Rollen besitzt, die aus Rollkörpern (33, 34) bestehen, die zueinander zur Selbstzentrierung einen Winkel bilden.

4. Führungsvorrichtung nach Anspruch 3, dadurch gekennzeichnet, daß der Träger (2) eine Halterung (38) aufweist, die mit einem Gehäuse (37) versehen ist, von dem die Achsen (35, 36) gehalten werden, um die sich die Rollkörper (33, 34) drehen.

5. Führungsvorrichtung nach Anspruch 1, dadurch gekennzeichnet, daß die Führungsschienen (27, 28) einen rechteckigen Querschnitt besitzen und von Abstandsstücken (46) gehalten werden, die mit dem unteren Ende (47) der Aussenseite (48) der Trennwand (23, 24) verbunden sind.

6. Führungsvorrichtung nach einem der Ansprüche 1 und 5, dadurch gekennzeichnet, daß der Träger (2) eine Halterung (55) besitzt, die mit einer Achse (53, 54) versehen ist, um die sich ein Rollkörper (51, 52) dreht, der auf der oberen und der unteren Kante (49 bzw. 50) der Führungsschienen (27, 28) rollend bewegt wird.

FIG.1